# EUROPÄISCHE PATENTSCHRIFT

(11) **EP 3 828 062 B1**
(45) Veröffentlichungstag und Bekanntmachung des Hinweises auf die Patenterteilung: **23.08.2023**
(21) Anmeldenummer: 20207494.4
(22) Anmeldetag: 13.11.2020
(51) Int. Cl.: B62H 3/12, E04H 6/00, B62H 5/00

(54) **DIEBSTAHLGESICHERTE AUFBEWAHRUNGSVORRICHTUNG, INSBESONDERE FÜR SPORTGERÄTE**
ANTI-THEFT STORAGE DEVICE, IN PARTICULAR FOR SPORTS EQUIPMENT
DISPOSITIF DE STOCKAGE ANTI-VOL, EN PARTICULIER POUR ARTICLES DE SPORT

(30) Priorität: 28.11.2019 LU 101503
(43) Veröffentlichungstag der Anmeldung: 02.06.2021
(73) Patentinhaber: Alfred Schellenberg GmbH, 57078 Siegen (DE)
(72) Erfinder: Schellenberg, Sascha, 57074 Siegen (DE); Büttner, Manuel, 57074 Siegen (DE)
(74) Vertreter: Hoffmann, Jürgen

(56) Entgegenhaltungen:
- DE-A1-102004 044 911
- DE-U1- 29 612 974
- DE-U1- 29 711 182
- FR-A1- 2 837 781
- US-A- 6 161 702
- US-A1- 2008 017 839
- US-A1- 2013 207 059
- US-B1- 6 237 781
- Anonymous: "MyLifter 2.0 by Garage Smart by myLIFTER - Kickstarter", , 1. Januar 2018 (2018-01-01), XP055712955, Gefunden im Internet: URL:https://www.kickstarter.com/projects/m ylifter/mylifter-20-by-garage-smart [gefunden am 2020-07-08]
- Anonymous: "Mylifter | Garage | Ceiling | Lift | Kayak | Bicycle | Woodworker's Journal", , 10. Oktober 2017 (2017-10-10), XP055714008, Gefunden im Internet: URL:https://www.woodworkersjournal.com/myl ifter-smarter-ceiling-storage/ [gefunden am 2020-07-13]
- Anonymous: "Amazon.com: Customer Questions & Answers", , 3. Oktober 2017 (2017-10-03), XP055714027, Gefunden im Internet: URL:https://www.amazon.com/ask/questions/a sin/B00ZTOV3O4/2 [gefunden am 2020-07-13]

## Beschreibung

Die Erfindung betrifft eine Aufbewahrungsvorrichtung zur diebstahlsicheren Aufbewahrung von Gegenständen, insbesondere für Sportgeräte, die die dazu ausgebildet und bestimmt ist, an einer Decke oder einer Wand montiert zu werden und eine Hebevorrichtung mit wenigstens einem flexiblen Zugmittel aufweist, wobei die Hebevorrichtung einen Antriebsmotor aufweist und wobei eine kabellose Fernbedienung, insbesondere eine Funkfernbedienung oder ein Smartphone, vorhanden ist, mittels der der Antriebsmotor steuerbar ist.

Aufzubewahrende Gegenstände werden zur Diebstahlsicherung üblicher Weise in verschlossenen Räumen abgestellt und/oder mit einem Schloss, beispielsweise mit einem Fahrradschloss, gesichert.

Unter der URL: https://www.kickstarter.com/projects/mylifter/mylifter-20-by-garage-smart ist eine gattungsgemäße Aufbewahrungsvorrichtung mit der Produktbezeichnung "MyLifter" offenbart, die an einer Decke oder einer Wand montiert wird und die eine Hebevorrichtung mit wenigstens einem flexiblen Zugmittel aufweist, wobei die Hebevorrichtung eine Wickelwelle, auf die das Zugmittel aufwickelbar ist.

Aus US 2013 0207059 ist eine Anordnung zum Heben und Lagern eines Eishauses oder eines anderen Gegenstandes offenbart.

Aus DE 296 12 974 U1 ist ein elektrischer Fahrradaufzug bekannt, bei dem Fahrräder durch einen Elektromotor in eine höhere Position gezogen werden.

Aus 297 11 182 U1 ist eine Vorrichtung zur hängenden Aufbewahrung von Zweirädern bekannt, die eine Wickelwelle aufweist.

Aus US 6 161 702 A ist ein Fahrradliftsystem bekannt, das elektrisch mit einem Motor oder von Hand mit einer Kurbel bedient werden kann.

Es ist die Aufgabe der vorliegenden Erfindung, eine Aufbewahrungsvorrichtung zur diebstahlsicheren Aufbewahrung von Gegenständen, insbesondere für Sportgeräte, anzugeben, die besonders benutzerfreundlich ist.

Die Aufgabe wird durch eine Aufbewahrungsvorrichtung gelöst, die dadurch gekennzeichnet ist, dass die Aufbewahrungsvorrichtung einen elektrischen Steckverbinder zum Ausgeben von elektrischer Energie an den aufzubewahrenden Gegenstand aufweist.

Die erfindungsgemäße Aufbewahrungsvorrichtung hat den Vorteil, dass Gegenstände diebstahlsicher ohne besonderen Kraftaufwand und einfach insbesondere an Orten verstaut werden können, die üblicherweise ungenutzt bleiben. Beispielsweise kann ein Gegenstand, wie ein Fahrrad oder ein Surfbrett, unmittelbar unter einer Gargendecke oder einer Zimmerdecke, verstaut werden, wo es für potentielle Diebe unerreichbar oder nur mit erheblichem Aufwand erreichbar ist. Es ist erfindungsgemäß vorteilhaft auch möglich, gleichzeitig mehrere Gegenstände, wie beispielsweise mehrere Fahrräder, zu verstauen.

Die Aufbewahrungsvorrichtung wird vorzugsweise von unten an einer Decke, beispielsweise an einer Zimmerdecke, einer Kellerdecke oder einer Garagendecke, befestigt. Es ist alternativ auch möglich, die Aufbewahrungsvorrichtung im oberen Bereich einer Wand zu befestigen. Die Aufbewahrungsvorrichtung kann hierzu eine Wandhalterung aufweisen. Vorzugsweise wird die Aufbewahrungsvorrichtung fest und unbeweglich an einer Decke oder an einer Wand montiert.

Um einen Gegenstand diebstahlsicher zu verstauen, wird das flexible Zugmittel (oder vorzugsweise die flexiblen mehreren Zugmittel) durch Einschalten des Antriebsmotors mittels der Fernbedienung zunächst so weist von der Wickelwelle abgewickelt, bis es von dem am Boden stehenden Bediener zum Ankoppeln des zu verstauenden Gegenstandes erreichbar ist (bzw. sind). Anschließend kann der Bediener den zu verstauenden Gegenstand bzw. die zu verstauenden Gegenstände, vorzugsweise mittels eines Ankoppelelements des flexiblen Zugmittels (bzw. der flexiblen Zugmittel) an die Aufbewahrungsvorrichtung ankoppeln. Danach wird der Antriebsmotor mittels der Fernbedienung wieder eingeschaltet und die Wickelwelle dadurch bei entgegengesetzter Rotationsrichtung wieder in Rotation versetzt. Hierdurch wird das Zugmittel (bzw. werden die Zugmittel) wieder auf die Wickelwelle aufgewickelt, wodurch der angekoppelte Gegenstand (bzw. die angekoppelten Gegenstände) nach oben in eine Aufbewahrungsposition gezogen wird (werden). Der Raum unter dem verstauten Gegenstand, bzw. den verstauten Gegenständen, steht dann vorteilhafter Weise weiterhin zur freien Verfügung.

Die kabellose Fernbedienung dient insoweit als elektronischer Schlüssel, der es ausschließlich dem Besitzer der Fernbedienung erlaubt, an den verstauten Gegenstand zu gelangen. Nur derjenige, der im Besitz der Fernbedienung ist, kann den (vorzugsweise an einem ohne Hilfsmittel unzugänglichen Ort, beispielsweise unmittelbar unter einer hohen Decke) verstauten Gegenstand wieder herablassen.

Vorzugsweise ist die Fernbedienung derart ausgebildet, dass eine Steuerung nur durch die berechtigte Person (oder die berechtigten Personen) erfolgen kann. Hierzu kann beispielsweise ein Passwortschutz vorgesehen sein, wobei die Fernbedienung jeweils erst dann benutzbar ist, wenn das hinterlegte Passwort von dem Benutzer korrekt eingegeben worden ist. Alternativ kann beispielsweise auch eine Autorisierung des Benutzers über einen Fingerabdrucksensor oder einen anderen biometrischen Sensor erfolgen.

Die Fernbedienung kann insbesondere auch ein Smartphone sein, das beispielsweise eine App zur Steuerung der Aufbewahrungsvorrichtung beinhaltet. Vorzugsweise sind das Smartphone und/oder die App derart ausgebildet, dass eine Steuerung nur durch die berechtigte Person (oder die berechtigten Personen) erfolgen kann. Hierzu kann beispielsweise ein Passwortschutz vorgesehen sein. Alternativ kann beispielsweise auch eine Autorisierung des Benutzers über einen Fingerabdrucksensor oder einen anderen biometrischen Sensor erfolgen.

Insbesondere kann die Steuerung der Aufbewahrungsvorrichtung per Bluetooth oder per WLAN oder über das Internet erfolgen. Insbesondere kann auch vorgesehen sein, dass die Aufbewahrungsvorrichtung dazu ausgebildet ist, in ein Funknetzwerk, insbesondere in ein WLAN-Netzwerk, eingebunden zu werden und über eine ebenfalls in das Funknetzwerk eingebundene Fernbedienung gesteuert zu werden.

Bei einer besonders kompakt ausbildbaren Ausführung ist der Antriebsmotor als Rohrmotor ausgebildet und wenigstens teilweise in der Wickelwelle angeordnet. Bei einer solchen Ausführung steht mehr Raum für das zu verstauende Gut zur Verfügung.

Der Antriebsmotor kann beispielsweise als Wechselstrommotor, insbesondere für eine Betriebsspannung von 230 Volt, ausgebildet sein. Alternativ kann der Motor als Gleichstrommotor, insbesondere für eine Betriebsspannung im Bereich von 5 Volt bis 30 Volt oder für eine Betriebsspannung von 12 Volt, ausgebildet sein. Die Aufbewahrungsvorrichtung kann insbesondere dazu ausgebildet sein, an ein Stromnetz, insbesondere mit einer Versorgungsspannung von 230 V, angeschlossen zu werden. Die Aufbewahrungsvorrichtung kann einen Stromrichter, insbesondere einen Transformator oder ein Schaltnetzteil, beinhalten, der eine Niederspannung, insbesondere eine Gleichspannung, zum Betreiben des Antriebsmotors bereitstellt. Der Stromrichter kann (alternativ oder zusätzlich) auch dazu dienen, einen Ladestrom, insbesondere ein Gleichstrom oder ein Niedervolt-Gleichstrom, für den aufzubewahrenden Gegenstand zur Verfügung zu stellen, was weiter unten im Detail erläutert ist.

Bei einer besonderen Ausführung ist dem Antriebsmotor ein Getriebe triebtechnisch nachgeschaltet. Eine solche Ausführung hat den ganz besonderen Vorteil, dass auch Gegenstände mit einem hohen Gewicht verstaut werden können, ohne einen Antriebsmotor mit einer höheren maximalen Ausgangsleistung verwenden zu müssen. Insbesondere kann vorteilhaft vorgesehen sein, dass auch das Getriebe in der Wickelwelle angeordnet ist. Hierdurch wird der in der Wickelwelle zur Verfügung stehende Bauraum besonders gut ausgenutzt. Dies erlaubt es, die gesamte Aufbewahrungsvorrichtung besonders kompakt auszubilden.

Bei einer ganz besonders vorteilhaften Ausführung sind der Antriebsmotor und das Getriebe Bestandteile eines Aktuators der als vorgefertigte Baueinheit in die Wickelwelle eingeschoben werden kann. Insbesondere kann der Aktuator ein Aktuatorgehäuse aufweisen, das wenigstens Teile des Antriebsmotors und wenigstens Teile des Getriebes umgibt.

Die Aufbewahrungsvorrichtung kann vorteilhaft eine Halterung aufweisen, die dazu ausgebildet und bestimmt ist, an einer Wand oder an einer Decke befestigt zu werden und die als Drehmomentabstützung für den Antriebsmotor fungiert. Die Halterung kann beispielsweise durch ein Rahmengestell, insbesondere aus Metallstreben, gebildet sein.

Die Halterung kann außerdem ein Gehäuse tragen, das zumindest die Wickelwelle umgibt. Eine solche Ausführung hat den besonderen Vorteil, dass das Gehäuse, beispielsweise für Wartungsarbeiten, abgenommen werden kann, während die übrigen Teile der Aufbewahrungsvorrichtung in der Montageposition verbleiben können. Alternativ ist es auch möglich, dass die Halterung durch das Gehäuse gebildet ist. Eine solche Ausführung kommt mit besonders wenigen Bauteilen aus und kann besonders kompakt ausgebildet werden.

Das Gehäuse schützt die Wickelwelle und den darin angeordneten Antriebsmotor vor äußeren Einflüssen, insbesondere vor Verschmutzung und vor einer Manipulation durch einen potentiellen Dieb. Insbesondere können auch elektrische und/oder elektronische Bauteile, wie beispielsweise eine Steuerungsvorrichtung oder eine Ladeelektronik für verstaute elektrische Fahrräder und/oder ein Energiespeicher, geschützt innerhalb des Gehäuses angeordnet sein. Für das Zugmittel kann das Gehäuse eine Auslassöffnung aufweisen. Fall mehrere Zugmittel vorhanden sind, kann das Gehäuse eine Auslassöffnung für jedes Zugmittel aufweisen. Es ist alternativ auch möglich, dass das Gehäuse für zwei oder mehr Zugmittel eine gemeinsame Auslassöffnung aufweist.

Das Zugmittel kann beispielsweise ein Seil, insbesondere ein Drahtseil, ein Band, insbesondere ein, vorzugsweise schnittfestes, Textilband, eine Kette oder eine Perlschnur aufweisen. Letztlich gibt es hinsichtlich der Art des flexiblen Bandes keine grundsätzlichen Beschränkungen. Wenn mehrere Zugmittel vorhanden sind, können diese vorteilhaft gleichartig ausgebildet sein.

Vorzugsweise weist die Aufbewahrungsvorrichtung mehrere, insbesondere genau zwei, Zugmittel auf. Eine solche Ausführung erlaubt es, zu verstauende Gegenstände sicher anzukoppeln. Hierbei kann vorteilhaft insbesondere vorgesehen sein, dass die Zugmittel an ein und dieselbe Wickelwelle angebunden sind. Beim Anheben eines aufzubewahrenden Gegenstandes werden hierbei beide Zugmittel gleichzeitig auf ein und dieselbe Wickelwelle aufgewickelt. Beim Absenken des Gegenstandes werden beide Zugmittel gleichzeitig von dieser Wickelwelle wieder abgewickelt. Insbesondere kann die Aufbewahrungsvorrichtung ausschließlich eine einzige Wickelwelle aufweisen.

Diese Ausführung hat den Vorteil, dass vermieden wird, mehrere Antriebsmotore gleichzeitig und/oder synchron ansteuern zu müssen. Außerdem kann hierbei vorteilhaft vorgesehen sein, dass die Länge der Wickelwelle (in Richtung ihrer Rotationsachse) größer ist, als der Abstand der, vorzugsweise parallel verlaufenden, Zugmittel. Auf diese Weise kann vorteilhaft auf eine zusätzliche Umlenkung, beispielsweise in Form einer Umlenkrolle oder eines Umlenkrades, für die Zugmittel verzichtet werden. Insbesondere haben diese Ausführungen den Vorteil, dass ein Abstand der, vorzugsweise parallel verlaufenden, Zugmittel im Bereich von 50 cm bis 90 cm, insbesondere im Bereich von 55 cm bis 65 cm. Insbesondere kann der Horizontalabstand vorteilhaft 60 cm, einfach und vorzugsweise ohne zusätzliche Umlenkung eines der Zugmittel realisierbar ist.

Alternativ kann vorteilhaft auch vorgesehen sein, dass die Aufbewahrungsvorrichtung mehrere Wickelwellen aufweist, die gemeinsam von demselben Antriebsmotor angetrieben werden. Eine solche Ausführung hat ebenfalls den Vorteil, dass vermieden wird, mehrere Antriebsmotore gleichzeitig und/oder synchron ansteuern zu müssen Vorzugeweise sind die Rotationsachsen der Wickelwellen koaxial oder parallel zueinander ausgerichtet. Außerdem kann hierbei vorteilhaft vorgesehen sein, dass der Abstand der Wickelwellen dem Abstand der, vorzugsweise parallel verlaufenden, Zugmittel entspricht. Auf diese Weise kann vorteilhaft auf eine zusätzliche Umlenkung, beispielsweise in Form einer Umlenkrolle oder eines Umlenkrades, für die Zugmittel verzichtet werden. Insbesondere haben diese Ausführungen den Vorteil, dass ein Abstand der, vorzugsweise parallel verlaufenden, Zugmittel im Bereich von 50 cm bis 90 cm, insbesondere im Bereich von 55 cm bis 65 cm. Insbesondere kann der Horizontalabstand vorteilhaft 60 cm, einfach und vorzugsweise ohne zusätzliche Umlenkung eines der Zugmittel realisierbar ist

Bei einer besonderen Ausführung liegt der Horizontalabstand der beiden Zugmittel im Bereich von 50 cm bis 90 cm, insbesondere im Bereich von 55 cm bis 65 cm. Insbesondere kann der Horizontalabstand vorteilhaft 60 cm betragen. Diese Horizontalabstände sind besonders vorteilhaft, wenn Fahrräder verstaut der sollen. Zum Verstauen eines Fahrrades kann beispielsweise eines der Zugmittel an den Lenker oder dem Vorbau angekoppelt werden, während das andere Zugmittel an den Sattel angekoppelt wird.

Bei einer ganz besonders vorteilhaften Ausführung ist der Horizontalabstand der Zugmittel, insbesondere stufenlos, einstellbar. Diese Ausführung kann vorteilhaft individuell auf den zu verstauenden Gegenstand bzw. die zu verstauenden Gegenstände eingestellt werden.

Um die Aufbewahrungsvorrichtung flexibel und individuell auf den zu verstauenden Gegenstand bzw. die zu verstauenden Gegenstände einstellen zu können, kann wenigstens eines der mehreren Zugmittel derart ausgebildet sein, dass dessen Länge, insbesondere stufenlos, veränderbar ist. Hierzu kann beispielsweise ein Gurtversteller, wie bei dem Tragegurt eines Rucksacks, und/oder eine in der Schlaufengröße verstellbare Schlaufe, die auch als Ankoppelelement zum Ankoppeln einer zu hebenden Last fungieren kann, vorhanden sein.

Ganz allgemein gilt, dass die Zugmittel unterschiedlich lang sein können, wobei die Längendifferenz der Zugmittel vorzugsweise einstellbar ist. Unterschiedlich lange Zugmittel haben den besonderen Vorteil, dass beispielsweise der Höhenunterschied zwischen dem Sattel und dem Lenker Fahrrades, das aufbewahrt werden soll, durch die Längendifferenz der Zugmittel ausgeglichen werden kann, so dass das Fahrrad trotz des Höhenunterschied zwischen dem Sattel und dem Lenker in der Aufbewahrungsposition horizontal hängen kann.

Vorzugsweise weist wenigstens eines der Zugmittel an seinem freien Ende ein Ankoppelelement zum Ankoppeln einer zu hebenden Last auf. Beispielsweise kann das Ankoppelelement als, insbesondere verstellbare, Schlaufe ausgebildet sein. Vorzugsweise kann die Weite der Schlaufe, insbesondere stufenlos, eingestellt werden. Die Schlaufe kann beispielsweise dadurch gebildet sein, dass ein Endabschnitt eines Bandes des Zugmittels zurückgeschlagen und an einem Mittelabschnitt des Bandes, beispielsweise mittels eines Klettverschlusses, befestigt ist. Hierzu kann der Endabschnitt beispielsweise mit Kletthaken versehen sein, während der Mittelabschnitt 14 ein Flauschband trägt, oder umgekehrt.

Ganz allgemein kann vorteilhaft vorgesehen sein, dass das Ankoppelelement einen Klettverschluss aufweist. Eine solche Ausführung ist besonders flexibel an unterschiedliche zu verstauende Gegenstände ankoppelbar.

Bei einer besonderen Ausführung weist das Ankoppelelement einen Haken auf. Der Haken kann in einen zu verstauenden Gegenstand eingehakt werden, um den Gegenstand an die Aufbewahrungsvorrichtung anzukoppeln. Insbesondere kann der Haken hinsichtlich Form und Größe speziell an den aufzubewahrenden Gegenstand angepasst sein.

Bei einer ganz besonders vorteilhaften Ausführung weist das Ankoppelelement eine Ablageplattform auf, auf der der aufzubewahrende Gegenstand abgelegt werden kann oder mehrere aufzubewahrende Gegenstände abgelegt werden können.

Die Aufbewahrungsvorrichtung kann wenigstens eine mechanische Sicherungsvorrichtung mit einem Schloss aufweisen, mittels der der aufzubewahrende Gegenstand mit der Aufbewahrungsvorrichtung wegnahmesicher verbunden werden kann. Die Sicherungsvorrichtung kann beispielsweise ein Drahtseil oder eine Kette aufweisen, die endseitig fest (und vorzugsweise nicht zerstörungsfrei lösbar) mit dem an der Decke oder an der Wand befestigten Teil der Aufbewahrungsvorrichtung verbunden ist. Das andere Ende des Drahtseiles oder der Kette wird mittels eines Schlosses, beispielsweise mittels eines Schlosses, beispielsweise mittels eines Vorhängeschlosses oder eines Bügelschlosses, mit dem aufzubewahrenden Gegenstand verbunden.

Bei einer besonders einfach handhabbaren Ausführung ist das Zugmittel Teil der Sicherungsvorrichtung. Insbesondere bei einer solchen Ausführung kann das Ankoppelelement ein Schloss aufweisen oder als Schloss ausgebildet sein. Das Schloss kann insbesondere nach Art eines Vorhängeschlosses oder eines Bügelschlosses ausgebildet sein. Vorzugsweise sind die Zugmittel bei einer solchen Ausführung derart, insbesondere schnittfest, ausgeführt, dass sie nicht mit einem Messer oder einer Schere durchtrennt werden können. Der aufwickelbare Teil des Zugmittels kann hierfür beispielsweise als Drahtseil oder als Kette, insbesondere aus Metall, ausgebildet sein.

Die Aufbewahrungsvorrichtung kann dazu ausgebildet sein, an ein Stromnetz angeschlossen zu werden, das den Antriebsmotor mit elektrischer Energie versorgt.

Es ist alternativ jedoch auch möglich, dass die Aufbewahrungsvorrichtung einen elektrischen Energiespeicher, insbesondere einen Akku, aufweist, der Energie zum Betreiben des Antriebsmotors bereitstellt. Eine solche Aufbewahrungsvorrichtung kann vorteilhafter Weise auch in Räumen verwendet werden, in denen kein Stromnetzanschluss zur Verfügung steht. Der elektrischen Energiespeicher kann auch dazu dienen, elektrische Energie an einen aufzubewahrenden Gegenstand abzugeben. Auf diese Weise ist es beispielsweise ermöglicht, den Akku eines aufzubewahrenden elektrischen Fahrrades während der Aufbewahrungszeit aufzuladen.

Beispielsweise kann die Aufbewahrungsvorrichtung derart ausgebildet sein, dass der elektrische Energiespeicher für einen Ladevorgang, insbesondere werkzeugfrei und/oder zerstörungsfrei, entnommen und nach dem Aufladen, insbesondere werkzeugfrei und/oder zerstörungsfrei, wieder eingefügt werden kann. Hierzu kann die Aufbewahrungsvorrichtung vorteilhaft eine Aufnahme aufweisen, in die der Energiespeicher, beispielswiese rastend und/oder formschlüssig, einfügbar ist. Die Aufnahme kann beispielsweise in einem Gehäuse der Aufbewahrungsvorrichtung ausgebildet sein. Es kann hierbei insbesondere auch vorgesehen sein, dass eine Aufnahme zum Einstecken des Energiespeichers über ein Kabel angebunden ist. Dies ermöglicht es, den Energiespeicher an einem ohne zusätzliche Hilfsmittel, wie beispielsweise eine Leiter, zugänglichen Ort anzubringen, während die übrigen Teile der Aufbewahrungsvorrichtung an einem Ort angebracht sein können, beispielsweise unmittelbar an einer hohen Decke, der ohne zusätzliche Hilfsmittel nicht zugänglich ist.

Vorzugsweise ist die Aufnahme derart ausgebildet, dass beim Einfügen des Energiespeichers automatisch und ohne dass hierfür zusätzliche Handhabungsschritte erforderlich sind, auch eine elektrische Ankopplung des Energiespeichers, insbesondere an den Antriebsmotor und/oder eine elektrische Steuerungsvorrichtung und/oder an einen Steckverbinder zum Ausgeben von elektrischer Energie an einen externen Verbraucher, insbesondere den aufzubewahrenden Gegenstand, und/oder an einen Transformator und/oder an ein Schaltnetzteil erfolgt.

Erfindungsgemäß weist die Aufbewahrungsvorrichtung einen elektrischen Steckverbinder zum Ausgeben von elektrischer Energie auf. Dies hat den ganz besonderen Vorteil, dass aufzubewahrende Gegenstände, die einen elektrischen Stromanschluss benötigen, in der Aufbewahrungsposition mit elektrischer Energie versorgt werden können. Beispielsweise kann das Ladegerät eines aufzubewahrenden elektrischen Fahrrades angeschlossen werden.

Es ist, alternativ oder zusätzlich, auch möglich, dass die Aufbewahrungsvorrichtung einen Stromrichter, insbesondere einen Transformator oder ein Schaltnetzteil, aufweist. Insbesondere kann auf diese Weise beispielsweise ein Ladestrom, insbesondere ein Gleichstrom oder ein Niedervolt-Gleichstrom, für den aufzubewahrenden Gegenstand zur Verfügung gestellt werden. Dies ermöglicht es beispielsweise, einen Akku eines aufzubewahrenden elektrischen Fahrrades aufzuladen, ohne dass ein zusätzliches Ladegerät benötigt wird. Alternativ oder zusätzlich kann auch vorgesehen sein, dass elektrische Energie aus einem Energiespeicher der Aufbewahrungsvorrichtung dem Benutzer, beispielsweise zum Aufladen des Akkus eines Fahrrades, zur Verfügung gestellt wird.

Die Wickelwelle kann vorteilhaft in einer zu ihrer Längserstreckungsrichtung senkrechten Ebene eine Kreisform aufweisen. Bei einer solchen Ausführung kann beispielsweise mit einer radial verlaufenden Schraube eine drehfeste Abbindung eines Abtriebselements des Antriebsmotors an die Wickelwelle hergestellt sein.

Die Wickelwelle kann alternativ und vorteilhaft in einer zu ihrer Längserstreckungsrichtung senkrechten Ebene eine von der Kreisform abweichende Form aufweisen. Insbesondere kann die Wickelwelle im Querschnitt mehreckig, insbesondere sechseckig oder achteckig, ausgebildet sein. Eine solche Ausführung ermöglicht eine einfache, formschlüssige drehfeste Anbindung eines entsprechend komplementär geformten Abtriebselements des Antriebsmotors. Beispielsweise kann die Wickelwelle eine im Querschnitt sechseckige oder achteckige Innenkontur (insbesondere regelmäßiges Sechseck oder regelmäßiges Achteck) aufweisen, während das Abtriebselement eine im Querschnitt entsprechende sechseckige oder achteckige Außenkontur aufweist.

Bei einer besonders vorteilhaften Ausführung weist die Wickelwelle wenigstens ein Wickelrad auf. Das Wickelrad kann beispielsweise auf einer Grundwelle der Wickelwelle drehfest befestigt sein. Vorzugsweise ist für jedes Zugmittel ein Wickelrad vorhanden. Das Wickelrad kann seitliche Begrenzungswangen zum Führen des Zugmittels bei einem Aufwickelvorgang aufweisen. Die Begrenzungswangen können mittels einer Nabe verbunden sein. Insbesondere kann der Abstand der Begrenzungswangen der Breite des Zugmittels in Axialrichtung entsprechen, so dass das Zugmittel bei einem Aufwickelvorgang derart aufgewickelt wird, dass die einzelnen Lagen des aufgewickelten Zugmittels radial übereinander liegen. Auf diese Weise sind vorteilhaft ein unkontrolliertes Aufwickeln und insbesondere ein Verheddern vermieden.

Von ganz besonderem Vorteil ist ein Aufbewahrungsvorrichtungssystem, das wenigstens zwei erfindungsgemäße Aufbewahrungsvorrichtungen aufweist, die mittels der Fernbedienung synchron gesteuert sind.

Ein synchrones Steuern aller Aufbewahrungsvorrichtungen des Aufbewahrungsvorrichtungssystems hat den Vorteil, dass ein aufzubewahrender Gegenstand gemeinsam und gleichzeitig von mehreren Aufbewahrungsvorrichtungen in die Aufbewahrungsposition überführt und aus der Aufbewahrungsposition zurück gebracht werden kann oder dass mehrere aufzubewahrende Gegenstände gemeinsam und gleichzeitig von den mehreren Aufbewahrungsvorrichtungen des Aufbewahrungsvorrichtungssystems in die Aufbewahrungsposition überführt und aus der Aufbewahrungsposition zurück gebracht werden können. Ein solches Aufbewahrungsvorrichtungssystem kann insbesondere zum Einsatz kommen, wenn der aufzubewahrende Gegenstand besonders groß und/oder besonders schwer ist.

Bei einer besonderen Ausführung des Aufbewahrungsvorrichtungssystems weisen die Aufbewahrungsvorrichtungen ein gemeinsames Ankoppelelement zum Ankoppeln einer zu hebenden Last auf. Hierbei kann es sich beispielsweise um eine gemeinsame Ablageplattform oder ein gemeinsames Ablagenetz handeln, auf dem bzw. in dem aufzubewahrende Gegenstände abgelegt werden können.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel einer erfindungsgemäßen Aufbewahrungsvorrichtung,
- Fig.2: ein zweites Ausführungsbeispiel einer erfindungsgemäßen Aufbewahrungsvorrichtung,
- Fig.3: ein drittes Ausführungsbeispiel einer erfindungsgemäßen Aufbewahrungsvorrichtung,
- Fig. 4: ein viertes Ausführungsbeispiel einer erfindungsgemäßen Aufbewahrungsvorrichtung,
- Fig. 5: ein fünftes Ausführungsbeispiel einer erfindungsgemäßen Aufbewahrungsvorrichtung,
- Fig. 6: das fünfte Ausführungsbeispiel einer erfindungsgemäßen Aufbewahrungsvorrichtung mit unterschiedlich lang eingestellten Zugmitteln,
- Fig. 7: ein sechstes Ausführungsbeispiel einer erfindungsgemäßen Aufbewahrungsvorrichtung,
- Fig. 8: das sechste Ausführungsbeispiel mit einem verstauten Fahrrad,
- Fig. 9: ein Ausführungsbeispiel eines erfindungsgemäßen Aufbewahrungsvorrichtungssystems, und
- Fig. 10: ein siebentes Ausführungsbeispiel einer erfindungsgemäßen Aufbewa hrungsvorrichtu ng.

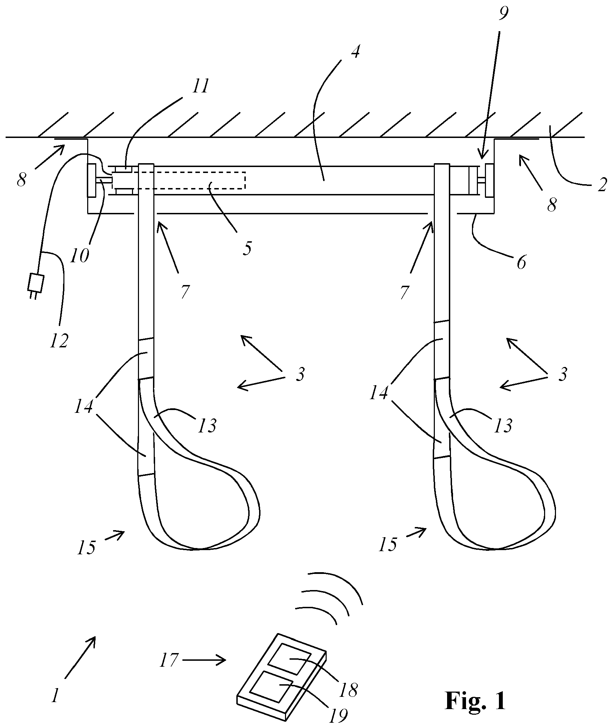

Fig. 1 zeigt ein erstes Ausführungsbeispiel einer erfindungsgemäßen Aufbewahrungsvorrichtung 1, die an einer Decke 2 befestigt ist. Die Aufbewahrungsvorrichtung 1 weist eine Hebevorrichtung mit zwei flexiblen Zugmitteln 3 auf. Die Hebevorrichtung weist außerdem eine Wickelwelle 4 auf, auf die die Zugmittel 3 aufwickelbar sind. Die Zugmittel 3 sind u.a. aus Bändern gefertigt, die insbesondere textile Bänder sein können.

An den freien Enden weisen die Zugmittel 3 jeweils ein als Schlaufe ausgebildetes Ankoppelelement 15 zum Ankoppeln eines zu verstauenden Gegenstandes, beispielsweise zum Ankoppeln eines Fahrrades oder eines Surfbretts, auf. Die Weite der Schlaufen kann stufenlos eingestellt werden. Die Schlaufe kann insbesondere dadurch gebildet sein, dass ein Endabschnitt 13 des jeweiligen Bandes zurückgeschlagen und an einem Mittelabschnitt 14 des Bandes, beispielsweise mittels eines Klettverschlusses, befestigt ist. Hierzu kann der Endabschnitt 13 mit (nicht dargestellten) Kletthaken versehen sein, während der Mittelabschnitt 14 ein (nicht näher dargestelltes) Flauschband trägt.

Die Aufbewahrungsvorrichtung 1 weist ein Gehäuse 6 auf, das die Wickelwelle 4 schützend umgibt. Das Gehäuse 6 weist für jedes der Zugmittel 3 eine Auslassöffnung 7 auf. Das Gehäuse 6 weist außerdem Befestigungsabschnitte 8 auf, mittels denen eine Befestigung der Aufbewahrungsvorrichtung 1an der Decke 2 ermöglicht ist. Beispielsweise können die Befestigungsabschnitte 8 (nicht dargestellte) Durchgangsöffnungen für (nicht dargestellte) Befestigungsschrauben aufweisen.

Die Wickelwelle 4 ist in dem Gehäuse 6 rotierbar gelagert. An einem Ende der Wickelwelle 4 ist ein Drehlager 9 montiert, mit dem die Wickelwelle 4 relativ zu dem Gehäuse 6 rotierbar gehaltert ist.

In das andere Ende der Wickelwelle 4 ist ein Antriebsmotor 5 eingefügt, der als Rohrmotor ausgebildet ist. Mit dem Antriebsmotor 5 kann die Wickelwelle 4 zur Rotation angetrieben werden, um die Zugmittel 3 wahlweise (je nach Drehrichtung) auf die Wickelwelle 4 aufzuwickeln oder von der Wickelwelle 4 abzuwickeln. Die Wickelwelle 4 ist an diesem Ende über den Antriebsmotor 5, der sich mittels einer Drehmomentstütze 10 an dem Gehäuse 6 abstützt, gehalten.

Der Antriebsmotor 5 weist ein Abtriebselement 11 auf, das drehfest mit der Wickelwelle 4 in Wirkverbindung steht. Bei der drehfesten Verbindung kann es sich vorteilhaft um eine Formschlussverbindung handeln. Eine Formschlussverbindung ist besonders vorteilhaft, wenn die Wickelwelle 4 in einer zu ihrer Längserstreckungsrichtung senkrechten Ebene eine von der Kreisform abweichende Form, beispielsweise die Form eines regelmäßigen Sechs- oder Achtecks, aufweist.

Das Gehäuse 6 fungiert als Halterung, über die das von dem Antriebsmotor 5 erzeugte Drehmoment an der Decke 2 abgestützt wird.

Bei diesem Ausführungsbeispiel wird der Antriebsmotor 5 mittels eines elektrischen Anschlusskabels 12 an ein Stromnetz angeschlossen.

Um einen Gegenstand zu verstauen, werden die Zugmittel 3 zunächst so weist von der Wickelwelle 4 abgewickelt, bis sie von dem am Boden stehenden Bediener zum Ankoppeln des Gegenstandes erreichbar sind. Die herabhängenden freien Enden der Zugmittel 3 können jeweils ein (nicht dargestelltes) Gewichtselement aufweisen, das gewährleistet, dass die jeweils gerade abgewickelten Abschnitte ohne sich zu verheddern durch die Gewichtskraft aus den Austrittsöffnungen 7 der Gehäuses 6 gezogen werden.

Anschließend kann der Bediener den zu verstauenden Gegenstand, beispielsweise ein Fahrrad (oder mehrere Fahrräder) oder ein Surfbrett, mittels der Ankoppelelemente 15 ankoppeln. Danach werden die Zugmittel 3 wieder auf die Wickelwelle 4 aufgewickelt, wodurch der angekoppelte Gegenstand nach oben in eine Aufbewahrungsposition gezogen wird. Der Raum unter dem Gegenstand steht dann vorteilhafter Weise weiterhin zur freien Verfügung.

Zur Steuerung des Antriebsmotors 5 ist bei eine Funkfernbedienung 17 vorhanden. Die Funkfernbedienung 17 weist eine erste Taste 18 für "Aufwärts" und eine zweite Taste 19 für "Abwärts" auf. Beim Drücken der ersten Taste 18 für "Aufwärts" wird ein angekoppelter Gegenstand nach oben in die Aufbewahrungsposition gezogen. Beim der zweiten Taste für "Abwärts" wird der Gegenstand wieder abgelassen.

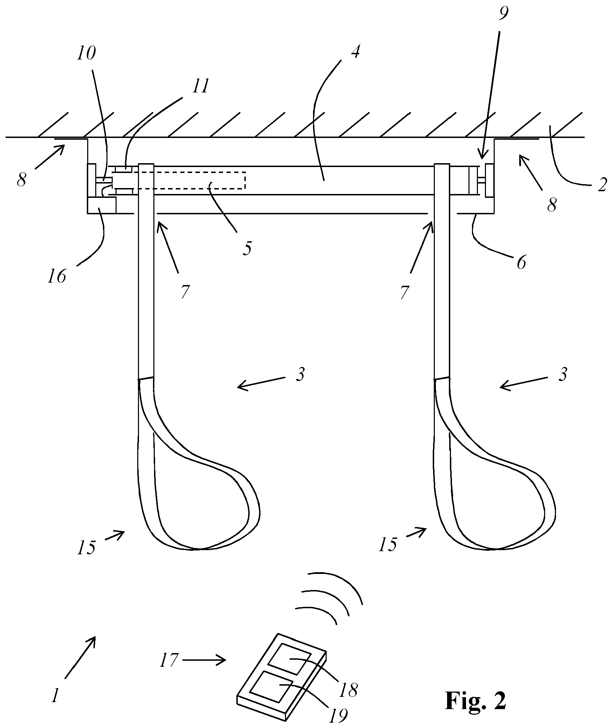

Fig. 2 zeigt ein zweites Ausführungsbeispiel einer erfindungsgemäßen Aufbewahrungsvorrichtung 1. Im Unterscheid zu der Aufbewahrungsvorrichtung 1 gemäß dem ersten Ausführungsbeispiel weist die in Figur 2 dargestellte Aufbewahrungsvorrichtung 1 kein Anschlusskabel 12 auf. Stattdessen ist ein elektrischer Energiespeicher 16 vorhanden, der Energie zum Betreiben des Antriebsmotors 5 bereitstellt. Der elektrische Energiespeicher 16 kann vorteilhaft als Akku ausgebildet sein. Der elektrische Energiespeicher 16 kann für einen Ladevorgang aus dem Gehäuse 6 entnommen und nach dem Aufladen wieder eingefügt werden.

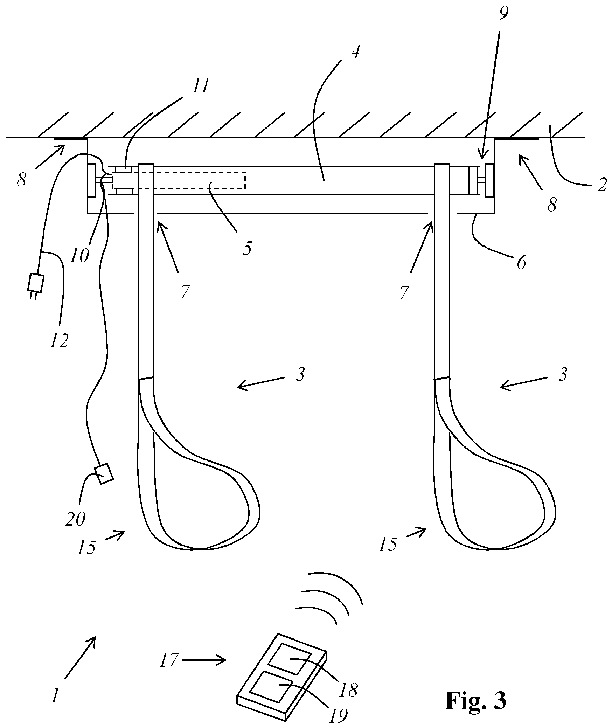

Fig. 3 zeigt ein drittes Ausführungsbeispiel einer erfindungsgemäßen Aufbewahrungsvorrichtung 1. Diese Aufbewahrungsvorrichtung 1 ist im Wesentlichen genauso aufgebaut, wie die in Figur 1 dargestellte Aufbewahrungsvorrichtung 1. Allerdings stellt die Aufbewahrungsvorrichtung 1 gemäß dem dritten Ausführungsbeispiel dem Benutzer einen elektrischen Steckverbinder 20, der insbesondere eine Buchse für einen Netzstecker sein kann, zum Ausgeben von elektrischer Energie zur Verfügung. An den elektrischen Steckverbinder 20 kann der Benutzer beispielsweise ein Ladegerät zum Aufladen eines elektrischen Fahrrades, das mittels der Aufbewahrungsvorrichtung 1 verstaut wird, anschließen.

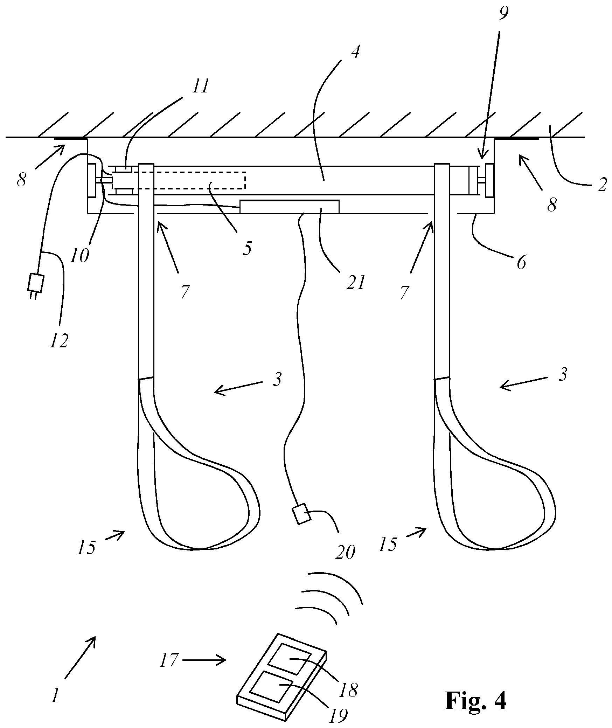

Fig. 4 zeigt ein viertes Ausführungsbeispiel einer erfindungsgemäßen Aufbewahrungsvorrichtung 1. Diese Aufbewahrungsvorrichtung 1 beinhaltet einen Stromrichter 21, insbesondere einen Transformator oder ein Schaltnetzteil, der als Ladegerät fungiert und eine Niedervoltgleichspannung, beispielsweise zum Aufladen eines elektrischen Fahrrades, das mittels der Aufbewahrungsvorrichtung 1 verstaut wird, zur Verfügung stellt.

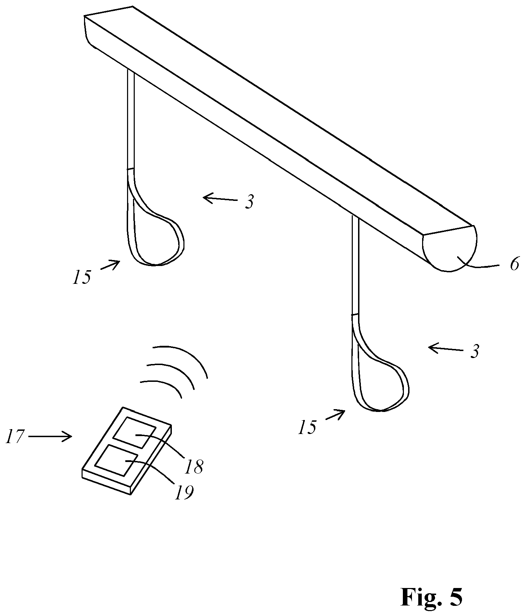

Fig. 5 zeigt in einer perspektivischen Darstellung ein fünftes Ausführungsbeispiel einer erfindungsgemäßen Aufbewahrungsvorrichtung 1, die dazu ausgebildet und bestimmt ist, an einer Decke, beispielsweise einer Zimmerdecke, einer Garagendecke oder einer Kellerdecke, vorzugsweise unbeweglich, montiert zu werden.

Die Aufbewahrungsvorrichtung 1 weist ein Gehäuse 6 auf, das die (in dieser Figur nicht dargestellte) Wickelwelle 4 samt dem (ebenfalls nicht dargestellten) Antriebsmotor 5 umgibt. Die Hebevorrichtung der Aufbewahrungsvorrichtung 1 weist zwei flexible Zugmittel 3 auf.

An den freien Enden weisen die Zugmittel 3 jeweils ein als Schlaufe ausgebildetes Ankoppelelement 15 zum Ankoppeln einer zu hebenden Last, beispielsweise zum Ankoppeln eines Fahrrades oder eines Surfbretts oder von anderen aufzubewahrenden Gegenständen, auf.

Zur Steuerung des Antriebsmotors 5 ist eine Funkfernbedienung 17 vorhanden. Die Funkfernbedienung 17 weist eine erste Taste 18 für "Aufwärts" und eine zweite Taste für "Abwärts" auf. Beim Drücken der ersten Taste 18 für "Aufwärts" wird ein angekoppelter Gegenstand nach oben in die Aufbewahrungsposition gezogen. Beim der zweiten Taste für "Abwärts" wird der Gegenstand wieder abgelassen.

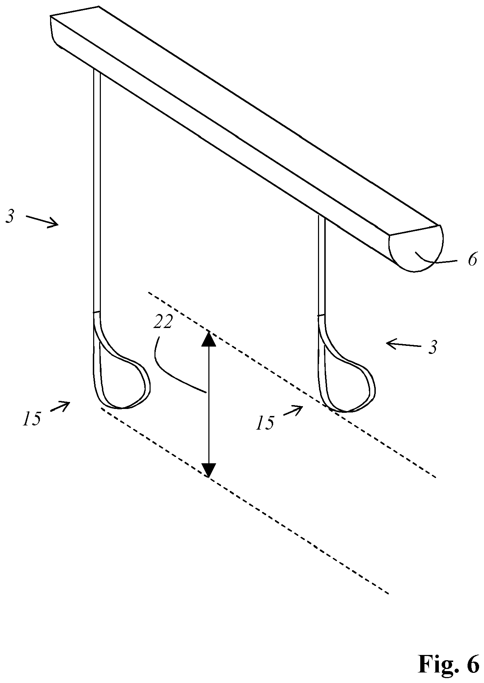

Die Länge der Zugmittel 3 kann, vorzugsweise stufenlos, eingestellt werden. Insbesondere können die Zugmittel 3 unterschiedlich lang eingestellt werden, was in Figur 6 dargestellt ist. Beispielsweise kann eine Längendifferenz 22 eingestellt werden.

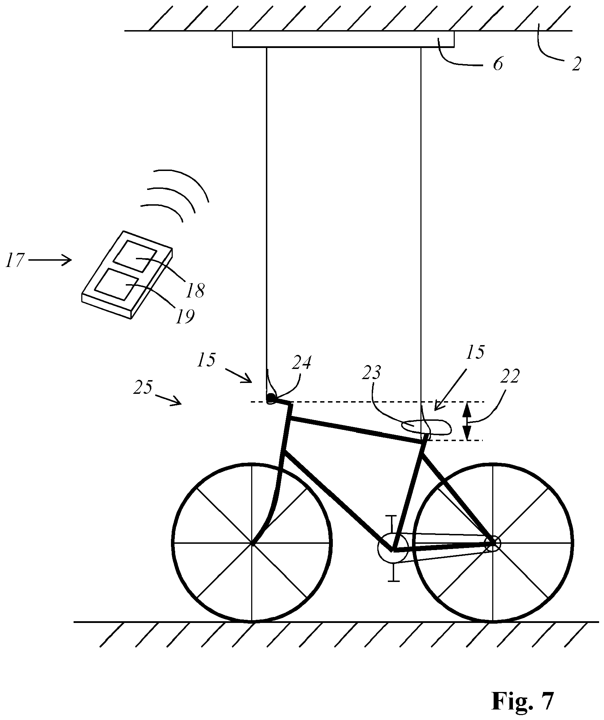

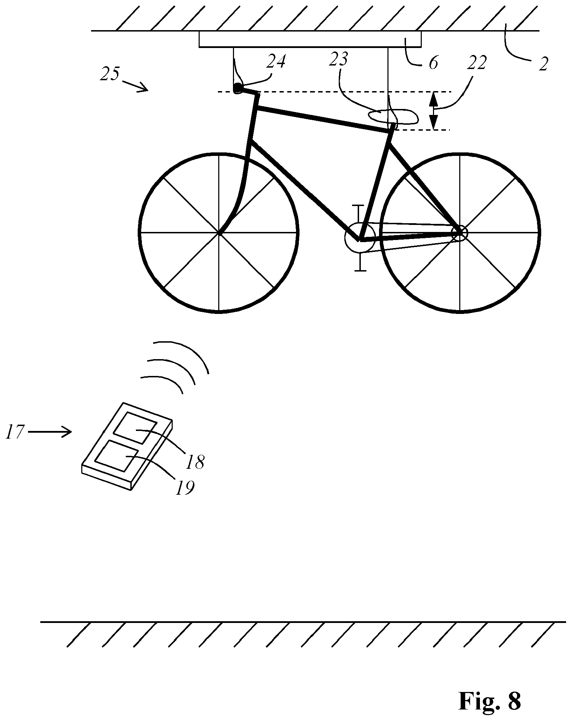

Unterschiedlich lange Zugmittel 3 haben den besonderen Vorteil, dass beispielsweise der Höhenunterschied zwischen dem Sattel 23 und dem Lenker 24 eines Fahrrades 25, das aufbewahrt werden soll, durch die Längendifferenz 22 ausgeglichen werden kann, was in den Figuren 7 und 8 schematisch dargestellt ist.

Fig. 7 zeigt die Situation beim Ankoppeln eines aufzubewahrenden Fahrrades 25 in Bezug auf ein sechstes Ausführungsbeispiel einer erfindungsgemäßen Aufbewahrungsvorrichtung. Das Fahrrad 25 wird mittels der Ankoppelelemente 15 angekoppelt. Danach werden die Zugmittel 3 wieder auf die (in dieser Figur nicht dargestellte) Wickelwelle 4 aufgewickelt, wodurch das angekoppelte Fahrrad 25 nach oben in eine Aufbewahrungsposition gezogen wird. Der Raum unter dem Gegenstand steht dann vorteilhafter Weise weiterhin zur freien Verfügung, was in Figur 8 dargestellt ist.

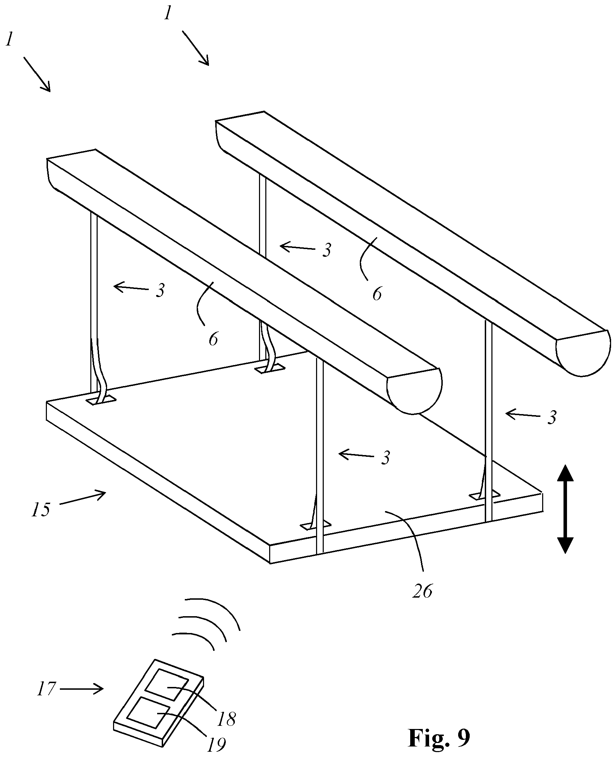

Figur 9 zeigt ein Ausführungsbeispiel eines erfindungsgemäßen Aufbewahrungsvorrichtungssystems, das zwei erfindungsgemäße Aufbewahrungsvorrichtungen 1 umfasst.

Die Aufbewahrungsvorrichtungen 1 weisen ein gemeinsames Ankoppelelement 15 zum Ankoppeln einer zu hebenden Last auf, das als Ablageplattform 26 ausgebildet ist auf.

Auf der Ablageplattform 26 können aufzubewahrende (in der Figur nicht dargestellte) Gegenstände abgelegt werden. Anschließend kann die Ablageplattform 26 nach oben in die Aufbewahrungsposition überführt werden.

Es ist eine Funkfernbedienung 17 vorhanden, mittels der beide Aufbewahrungsvorrichtungen 1 gleichzeitig und synchron steuerbar sind, so dass die Ablageplattform 26 sowohl beim Anheben als auch beim Absenken stets horizontal ausgerichtet bleibt. Die Funkfernbedienung 17 weist eine erste Taste 18 für "Aufwärts" und eine zweite Taste für "Abwärts" auf. Beim Drücken der ersten Taste 18 für "Aufwärts" wird die Ablageplattform 26 nach oben in die Aufbewahrungsposition gezogen. Beim der zweiten Taste für "Abwärts" wird die Ablageplattform 26 wieder abgelassen

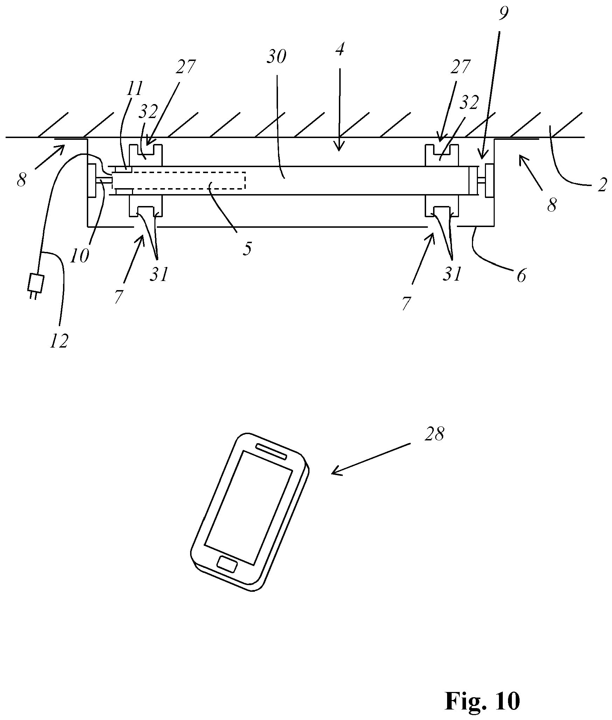

Fig. 10 zeigt ein siebentes Ausführungsbeispiel einer erfindungsgemäßen Aufbewahrungsvorrichtung 1, wobei die Zugmittel der besseren Übersichtlichkeit halber nicht eingezeichnet sind. Im Unterscheid zu der Aufbewahrungsvorrichtung 1 gemäß dem ersten Ausführungsbeispiel hat die in Figur 10 dargestellte Aufbewahrungsvorrichtung 1 eine Wickelwelle 4, die zwei Wickelräder 27 aufweist. Jedes Wickelrad 27 ist auf einer Grundwelle 30 der Wickelwelle 4 drehfest befestigt. Für jedes (in dieser Figur nicht dargestelltes) Zugmittel 3 ist ein eigenes Wickelrad 27 vorhanden. Jedes Wickelrad 27 weist seitliche Begrenzungswangen 31 zum Führen des Zugmittels bei einem Aufwickelvorgang auf. Die Begrenzungswangen 31 sind mittels einer Nabe 32 verbunden, wobei der Durchmesser der Nabe 32 größer ist, als der Durchmesser der Grundwelle 30. Die (nicht dargestellten) Zugmittel 3 werden bei einem Aufwickelvorgang auf die Naben 32 aufgewickelt. Der Abstand der Begrenzungswangen 31 entspricht jeweils vorzugsweise der Breite des (nicht dargestellten) Zugmittels.

Die Fernbedienung ist bei diesem Ausführungsbeispiel ein Smartphone 28, das eine App zur Steuerung der Aufbewahrungsvorrichtung 1 beinhaltet. Insbesondere bei einer solchen Ausführung kann die Steuerung der Aufbewahrungsvorrichtung per Bluetooth oder per WLAN oder über das Internet erfolgen. Insbesondere kann auch vorgesehen sein, dass die Aufbewahrungsvorrichtung 1 dazu ausgebildet ist, in ein Funknetzwerk, insbesondere in ein WLAN-Netzwerk, eingebunden zu werden und über das ebenfalls in das Funknetzwerk eingebundene Smartphone 28 gesteuert zu werden.

### Bezugszeichenliste:

- 1: Aufbewahrungsvorrichtung
- 2: Decke
- 3: Zugmittel
- 4: Wickelwelle
- 5: Antriebsmotor
- 6: Gehäuse
- 7: Auslassöffnung
- 8: Befestigungsabschnitt
- 9: Drehlager
- 10: Drehmomentstütze
- 11: Abtriebselement
- 12: elektrisches Anschlusskabel
- 13: Endabschnitt
- 14: Mittelabschnitt
- 15: Ankoppelelement
- 16: elektrischer Energiespeicher
- 17: Funkfernbedienung
- 18: erste Taste 18 für "Aufwärts"
- 19: zweite Taste 19 für "Abwärts"
- 20: elektrischer Steckverbinder
- 21: Stromrichter
- 22: Längendifferenz
- 23: Sattel
- 24: Lenker
- 25: Fahrrad
- 26: Ablageplattform

## Patentansprüche

1. Aufbewahrungsvorrichtung (1) zur diebstahlsicheren Aufbewahrung von Gegenständen, insbesondere für Sportgeräte, die dazu ausgebildet und bestimmt ist, an einer Decke (2) oder einer Wand montiert zu werden und eine Hebevorrichtung mit wenigstens einem flexiblen Zugmittel (3) aufweist, wobei die Hebevorrichtung einen Antriebsmotor (5) aufweist und wobei eine kabellose Fernbedienung, insbesondere eine Funkfernbedienung (17) oder ein Smartphone, vorhanden ist, mittels der der Antriebsmotor (5) steuerbar ist, **dadurch gekennzeichnet, dass** die Aufbewahrungsvorrichtung (1) einen elektrischen Steckverbinder (20) zum Ausgeben von elektrischer Energie an den aufzubewahrenden Gegenstand aufweist.

2. Aufbewahrungsvorrichtung (1) nach Anspruch 1, **dadurch gekennzeichnet, dass**
a. die Hebevorrichtung eine Wickelwelle (4) aufweist, auf die das Zugmittel (3) aufwickelbar ist, und/oder dass
b. die Hebevorrichtung eine Wickelwelle (4) aufweist, auf die das Zugmittel aufwickelbar ist, wobei der Antriebsmotor (5) als Rohrmotor zum Antreiben der Wickelwelle (4) ausgebildet und wenigstens teilweise in der Wickelwelle (4) angeordnet ist, und/oder dass
c. dem Antriebsmotor (5) ein Getriebe triebtechnisch nachgeschaltet ist, das in der Wickelwelle (4) angeordnet ist.

3. Aufbewahrungsvorrichtung (1) nach Anspruch 1 oder 2, **gekennzeichnet durch**
a. eine Halterung, die dazu ausgebildet und bestimmt ist, an einer Wand oder an einer Decke (2) befestigt zu werden und die als Drehmomentabstützung für den Antriebsmotor (5) fungiert, oder durch
b. ein Gehäuse (6), das zumindest die Wickelwelle (4) umgibt, oder durch ein Gehäuse (6), das zumindest die Wickelwelle (4) umgibt und das eine Auslassöffnung für das Zugmittel (3) aufweist, oder durch
c. eine Halterung, die dazu ausgebildet und bestimmt ist, an einer Wand oder an einer Decke befestigt zu werden und die als Drehmomentabstützung für den Antriebsmotor fungiert, und ein Gehäuse (6), das zumindest die Wickelwelle (4) umgibt, wobei die Halterung das Gehäuse (6) trägt oder dass die Halterung durch das Gehäuse (6) gebildet ist.

4. Aufbewahrungsvorrichtung (1) nach einem der Ansprüche 1 bis 3, **dadurch gekennzeichnet, dass**
a. mehrere, insbesondere genau zwei, Zugmittel (3) vorhanden sind, und/oder dass
b. zwei Zugmittel (3) vorhanden sind, deren Horizontalabstand im Bereich von 50 cm bis 90 cm, insbesondere im Bereich von 55 cm bis 65 cm liegt, oder 60 cm beträgt, und/oder dass
c. zwei Zugmittel (3) vorhanden sind, deren Horizontalabstand, insbesondere stufenlos, einstellbar ist, und/oder dass
d. zwei Zugmittel (3) vorhanden sind, wobei die Länge wenigstens eines der Zugmittel (3) einstellbar ist, und/oder dass
e. zwei unterschiedlich lange Zugmittel (3) vorhanden sind, und/oder dass
f. zwei zueinander parallele Zugmittel (3) vorhanden sind.

5. Aufbewahrungsvorrichtung (1) nach einem der Ansprüche 1 bis 4, **dadurch gekennzeichnet, dass**
a. mehrere Zugmittel (3), insbesondere genau zwei Zugmittel, an die Wickelwelle (4) angekoppelt sind, die gleichzeitig auf die Wickelwelle (4) aufwickelbar sind und gleichzeitig von der Wickelwelle (4) abwickelbar sind, oder dass
b. mehrere Zugmittel (3), insbesondere genau zwei Zugmittel, an die Wickelwelle (4) angekoppelt sind, die gleichzeitig auf die Wickelwelle (4) aufwickelbar sind und gleichzeitig von der Wickelwelle (4) abwickelbar sind, wobei die Länge der Wickelwelle (4) größer ist, als der Parallelabstand der Zugmittel (3), oder dass
c. mehrere Zugmittel (3), insbesondere genau zwei Zugmittel (3), und mehrere Wickelwellen (4) vorhanden sind, die gemeinsam von demselben Antriebsmotor angetrieben werden, oder dass
d. mehrere Zugmittel (3), insbesondere genau zwei Zugmittel, und mehrere Wickelwellen (4) vorhanden sind, die gemeinsam von demselben Antriebsmotor angetrieben werden, wobei der Parallelabstand der Zugmittel (3) dem Abstand der Wickelwellen (4) entspricht.

6. Aufbewahrungsvorrichtung (1) nach einem der Ansprüche 1 bis 5, **dadurch gekennzeichnet, dass**
a. das Zugmittel (3) an seinem freien Ende ein Ankoppelelement zum Ankoppeln einer zu hebenden Last aufweist oder dass jedes der Zugmittel (3) an seinem freien Ende ein Ankoppelelement (15) zum Ankoppeln einer zu hebenden Last aufweist, oder dass
b. das Zugmittel (3) an seinem freien Ende ein Ankoppelelement zum Ankoppeln einer zu hebenden Last aufweist oder dass jedes der Zugmittel (3) an seinem freien Ende ein Ankoppelelement (15) zum Ankoppeln einer zu hebenden Last aufweist, wobei das Ankoppelelement (15) als, insbesondere verstellbare, Schlaufe ausgebildet ist und/oder einen Klettverschluss aufweist und/oder einen Haken aufweist und/oder eine Ablageplattform aufweist.

7. Aufbewahrungsvorrichtung (1) nach einem der Ansprüche 1 bis 6, **gekennzeichnet durch**
a. einen, insbesondere werkzeugfrei und/oder zerstörungsfrei entnehmbaren, elektrischen Energiespeicher (16), insbesondere einen Akku, oder durch
b. einen, insbesondere werkzeugfrei und/oder zerstörungsfrei entnehmbaren, elektrischen Energiespeicher (16), insbesondere einen Akku, der Energie zum Betreiben des Antriebsmotors (5) und/oder zum Ausgeben an den aufzubewahrenden Gegenstand bereitstellt.

8. Aufbewahrungsvorrichtung (1) nach Anspruch 7, **gekennzeichnet durch** eine Aufnahme, in die der elektrische Energiespeicher (16), insbesondere werkzeugfrei und/oder zerstörungsfrei wieder entnehmbar, einfügbar ist.

9. Aufbewahrungsvorrichtung (1) nach einem der Ansprüche 1 bis 8, **dadurch gekennzeichnet, dass**
a. die Wickelwelle (4) in einer zu ihrer Längserstreckungsrichtung senkrechten Ebene eine von der Kreisform abweichende Form aufweist, oder dass
b. die Wickelwelle (4) in einer zu ihrer Längserstreckungsrichtung senkrechten Ebene eine von der Kreisform abweichende Form aufweist, wobei die Wickelwelle (4) im Querschnitt mehreckig, insbesondere sechseckig oder achteckig, ausgebildet ist.

10. Aufbewahrungsvorrichtung (1) nach Anspruch 9, **dadurch gekennzeichnet, dass** der Antriebsmotor (5) ein Abtriebselement (11) aufweist, das formschlüssig in der Wickelwelle (4) angeordnet ist.

11. Aufbewahrungsvorrichtung (1) nach einem der Ansprüche 1 bis 10, **dadurch gekennzeichnet, dass** die Aufbewahrungsvorrichtung (1) wenigstens eine mechanische Sicherungsvorrichtung mit wenigstens einem Schloss aufweist.

12. Aufbewahrungsvorrichtung (1) nach Anspruch 11, **dadurch gekennzeichnet, dass**
a. die Sicherungsvorrichtung ein Verbindungsmittel, insbesondere ein Drahtseil oder eine Kette, aufweist, das mit einem Ende fest mit dem an der Decke oder an der Wand zu befestigendem Teil der Aufbewahrungsvorrichtung verbunden ist oder verbindbar ist, und/oder dass
b. die Sicherungsvorrichtung ein Verbindungsmittel, insbesondere ein Drahtseil oder eine Kette, aufweist, das mit einem Ende fest mit dem an der Decke (2) oder an der Wand zu befestigendem Teil der Aufbewahrungsvorrichtung (1) verbunden ist oder verbindbar ist und das andere Ende des Verbindungsmittels ein Schloss aufweist, und/oder das
c. das Zugmittel (3) Teil der Sicherungsvorrichtung ist, und/oder dass
d. das Verbindungsmittel durch wenigstens einen Teil des Zugmittels (3) gebildet ist, und/oder dass
e. das Ankoppelelement (15) das Schloss aufweist oder als Schloss ausgebildet ist.

13. Aufbewahrungsvorrichtung (1) nach einem der Ansprüche 1 bis 12, **dadurch gekennzeichnet, dass**
a. die Fernbedienung eine Zugriffssicherungsvorrichtung aufweist, oder dass
b. die Fernbedienung eine Zugriffssicherungsvorrichtung aufweist, die einen biometrischen Sensor umfasst, oder dass
c. die Fernbedienung eine Zugriffssicherungsvorrichtung aufweist. die eine Vorrichtung zur Eingabe und Kontrolle eines Passwortes aufweist.

14. Aufbewahrungsvorrichtungssystem, das wenigstens zwei Aufbewahrungsvorrichtungen (1) nach einem der Ansprüche 1 bis 13 aufweist, die mittels derselben Fernbedienung gleichzeitig und synchron steuerbar sind.

## Claims

1. Storage device (1) for the anti-theft storage of objects, in particular for sporting equipment, which is designed and intended to be mounted on a ceiling (2) or wall and has a lifting device with at least one flexible pulling means (3), wherein the lifting device has a drive motor (5) and wherein there is a wireless remote control, in particular a radio remote control (17) or a smartphone, by means of which the drive motor (5) can be controlled, **characterized in that** the storage device (1) has an electrical plug connector (20) for outputting electrical energy to the object to be stored.

2. Storage device (1) according to Claim 1, **characterized in that**
a. the lifting device has a winding shaft (4), onto which the pulling means (3) can be wound, and/or **in that**
b. the lifting device has a winding shaft (4), onto which the pulling means can be wound, wherein the drive motor (5) is designed as a tubular motor for driving the winding shaft (4) and is at least partly arranged in the winding shaft (4), and/or **in that**
c. the drive motor (5) is followed in drive terms by a gearbox, which is arranged in the winding shaft (4).

3. Storage device (1) according to Claim 1 or 2, **characterized by**
a. a mounting, which is designed and intended to be fixed to a wall or to a ceiling (2) and which functions as a torque support for the drive motor (5), or by
b. a housing (6), which surrounds at least the winding shaft (4), or by a housing (6), which surrounds at least the winding shaft (4) and which has an outlet opening for the pulling means (3), or by
c. a mounting, which is designed and intended to be fixed to a wall or to a ceiling and which functions as a torque support for the drive motor, and a housing (6), which surrounds at least the winding shaft (4), wherein the mounting carries the housing (6) or the mounting is formed by the housing (6).

4. Storage device (1) according to one of Claims 1 to 3, **characterized in that**
a. there are several, in particular exactly two, pulling means (3), and/or **in that**
b. there are two pulling means (3), the horizontal spacing of which lies in the range from 50 cm to 90 cm, in particular in the range from 55 cm to 65 cm, or is 60 cm, and/or **in that**
c. there are two pulling means (3), the horizontal spacing of which is adjustable, in particular continuously, and/or **in that**
d. there are two pulling means (3), wherein the length of at least one of the pulling means (3) is adjustable, and/or **in that**
e. there are two pulling means (3) of different lengths, and/or **in that**
f. there are two pulling means (3) parallel to each other.

5. Storage device (1) according to one of Claims 1 to 4, **characterized in that**
a. several pulling means (3), in particular exactly two pulling means, are coupled to the winding shaft (4), can be wound simultaneously onto the winding shaft (4) and can be unwound simultaneously from the winding shaft (4), or **in that**
b. several pulling means (3), in particular exactly two pulling means, are coupled to the winding shaft (4), can be wound simultaneously onto the winding shaft (4) and can be unwound simultaneously from the winding shaft (4), wherein the length of the winding shaft (4) is greater than the parallel spacing of the pulling means (3), or **in that**
c. there are several pulling means (3), in particular exactly two pulling means (3), and several winding shafts (4), which are driven jointly by the same drive motor, or **in that**
d. there are several pulling means (3), in particular exactly two pulling means, and several winding shafts (4), which are driven jointly by the same drive motor, wherein the parallel spacing of the pulling means (3) corresponds to the spacing of the winding shafts (4).

6. Storage device (1) according to one of Claims 1 to 5, **characterized in that**
a. the pulling means (3) has a coupling element at its free end for coupling to a load to be lifted, or **in that** each of the pulling means (3) has a coupling element (15) at its free end for coupling to a load to be lifted, or **in that**
b. the pulling means (3) has a coupling element at its free end for coupling to a load to be lifted, or **in that** each of the pulling means (3) has a coupling element (15) at its free end for coupling to a load to be lifted, wherein the coupling element (15) is designed as an in particular adjustable loop and/or has a hook-and-loop fastener and/or has a hook and/or has a storage platform.

7. Storage device (1) according to one of Claims 1 to 6, **characterized by**
a. an electrical energy store (16), in particular a rechargeable battery, which can in particular be removed without tools and/or without destruction, or by
b. an electrical energy store (16), in particular a rechargeable battery, which can in particular be removed without tools and/or without destruction, which provides energy for operating the drive motor (5) and/or to be output to the object to be stored.

8. Storage device (1) according to Claim 7, **characterized by** a receptacle into which the electrical energy store (16) can be inserted and removed again, in particular without tools and/or without destruction.

9. Storage device (1) according to one of Claims 1 to 8, **characterized in that**
a. the winding shaft (4) has a shape deviating from the circular shape in a plane perpendicular to the direction of its longitudinal extent, or **in that**
b. the winding shaft (4) has a shape deviating from the circular shape in a plane perpendicular to the direction of its longitudinal extent, wherein the winding shaft (4) is designed to be polygonal in cross section, in particular hexagonal or octagonal.

10. Storage device (1) according to Claim 9, **characterized in that** the drive motor (5) has an output element (11) which is arranged in a form-fitting manner in the winding shaft (4).

11. Storage device (1) according to one of Claims 1 to 10, **characterized in that** the storage device (1) has at least one mechanical securing device with at least one lock.

12. Storage device (1) according to Claim 11, **characterized in that**
a. the securing device has a connecting means, in particular a wire rope or a chain, which is or can be connected firmly by one end to that part of the storage device which is to be fixed to the ceiling or to the wall, and/or **in that**
b. the securing device has a connecting means, in particular a wire rope or a chain, which is or can be connected firmly by one end to that part of the storage device (1) which is to be fixed to the ceiling (2) or to the wall, and the other end of the connecting means has a lock, and/or
c. the pulling means (3) is part of the securing device, and/or **in that**
d. the connecting means is formed by at least one part of the pulling means (3), and/or **in that**
e. the coupling element (15) has the lock or is designed as a lock.

13. Storage device (1) according to one of Claims 1 to 12, **characterized in that**
a. the remote control has an access security device, or **in that**
b. the remote control has an access security device which comprises a biometric sensor, or **in that**
c. the remote control has an access security device which has a device for entering and checking a password.

14. Storage device system, which has at least two storage devices (1) according to one of Claims 1 to 13, which can be controlled simultaneously and synchronously by means of the same remote control.

## Revendications

1. Dispositif de stockage (1) pour le stockage antivol d'objets, en particulier d'articles de sport, ledit dispositif étant réalisé et conçu pour être monté à un plafond (2) ou à une paroi et comportant un dispositif de levage avec au moins un moyen de traction flexible (3), dans lequel le dispositif de levage comporte un moteur d'entraînement (5) et dans lequel une télécommande sans fil, en particulier une télécommande radio (17) ou un smartphone, est présent, à l'aide duquel le moteur d'entraînement (5) peut être commandé, **caractérisé en ce que** le dispositif de stockage (1) comporte un connecteur enfichable électrique (20) permettant de transmettre de l'énergie à l'objet à stocker.

2. Dispositif de stockage (1) selon la revendication 1, **caractérisé en ce que** :
a. le dispositif de levage comporte un arbre d'enroulement (4) sur lequel le moyen de traction (3) peut être enroulé ; et/ou
b. le dispositif de levage comporte un arbre d'enroulement (4) sur lequel le moyen de traction peut être enroulé, dans lequel le moteur d'entraînement (5) est réalisé à la façon d'un moteur tubulaire pour entraîner l'arbre d'enroulement (4) et est disposé au moins en partie dans l'arbre d'enroulement (4) ; et/ou
c. une transmission est connectée en aval, sur le plan de la technique des impulsions, du moteur d'entraînement (5) disposé dans l'arbre d'enroulement (4).

3. Dispositif de stockage (1) selon la revendication 1 ou 2, **caractérisé par** :
a. une fixation, ledit dispositif étant réalisé et conçu pour être fixé à une paroi ou à un plafond (2) et servant d'appui au couple de rotation pour le moteur d'entraînement (5) ; ou
b. un carter (6) entourant au moins l'arbre d'enroulement (4), ou un carter (6) entourant au moins l'arbre d'enroulement (4) et comportant une ouverture de sortie pour le moyen de traction (3) ; ou
c. une fixation, ledit dispositif étant réalisé et conçu pour être fixé à une paroi ou à un plafond et servant d'appui au couple de rotation pour le moteur d'entraînement et un carter (6) entourant au moins l'arbre d'enroulement (4), la fixation supportant le carter (6) ou la fixation étant formée par le carter (6).

4. Dispositif de stockage (1) selon l'une quelconque des revendications 1 à 3, **caractérisé en ce que** :
a. plusieurs, en particulier précisément deux moyens de traction (3) sont présents ; et/ou
b. deux moyens de traction (3) sont présents dont l'écartement horizontal se situe dans la région de 50 cm à 90 cm, en particulier se situe dans la région de 55 cm à 65 cm, ou est de 60 cm ; et/ou
c. deux moyens de traction (3) sont présents dont l'écartement horizontal peut être réglé, en particulier en continu ; et/ou
d. deux moyens de traction (3) sont présents, la longueur d'au moins un des moyens de traction (3) pouvant être réglée ; et/ou
e. deux moyens de traction de longueurs différentes (3) sont présents ; et/ou
f. deux moyens de traction parallèles entre eux (3) sont présents.

5. Dispositif de stockage (1) selon l'une quelconque des revendications 1 à 4, **caractérisé en ce que** :
a. plusieurs moyens de traction (3), en particulier précisément deux moyens de traction, sont couplés à l'arbre d'enroulement (4), lesdits moyens de traction pouvant être enroulés simultanément sur l'arbre d'enroulement (4) et pouvant être déroulés simultanément de l'arbre d'enroulement (4) ; ou
b. plusieurs moyens de traction (3), en particulier précisément deux moyens de traction, sont couplés à l'arbre d'enroulement (4), lesdits moyens de traction pouvant être enroulés simultanément sur l'arbre d'enroulement (4) et pouvant être déroulés simultanément de l'arbre d'enroulement (4), la longueur de l'arbre d'enroulement (4) étant supérieure à la distance parallèle des moyens de traction (3) ; ou
c. plusieurs moyens de traction (3), en particulier précisément deux moyens de traction (3), et plusieurs arbres d'enroulement (4) sont présents qui sont entraînés ensemble par le même moteur d'entraînement, ou
d. plusieurs moyens de traction (3), en particulier précisément deux moyens de traction, et plusieurs arbres d'enroulement (4) sont présents qui sont entraînés ensemble par le même moteur d'entraînement, la distance parallèle des moyens de traction (3) correspondant à la distance des arbres d'enroulement (4).

6. Dispositif de stockage (1) selon l'une quelconque des revendications 1 à 5, **caractérisé en ce que** :
a. le moyen de traction (3) comporte au niveau de son extrémité libre un élément de couplage pour le couplage d'une charge à lever ou que chacun des moyens de traction (3) comporte au niveau de son extrémité libre un élément de couplage (15) pour le couplage d'une charge à lever ; ou
b. le moyen de traction (3) comporte au niveau de son extrémité libre un élément de couplage pour le couplage d'une charge à lever ou que chacun des moyens de traction (3) comporte au niveau de son extrémité libre un élément de couplage (15) pour le couplage d'une charge à lever, l'élément de couplage (15) étant réalisé sous la forme d'une boucle en particulier réglable et/ou comportant une fermeture velcro et/ou un crochet et/ou comportant une plateforme de rangement.

7. Dispositif de stockage (1) selon l'une quelconque des revendications 1 à 6, **caractérisé par** :
a. un accumulateur d'énergie électrique (16) pouvant en particulier être retiré sans outil et/ou sans destruction, en particulier une batterie ; ou
b. un accumulateur d'énergie électrique (16) pouvant en particulier être retiré sans outil et/ou sans destruction, en particulier une batterie, qui met à disposition de l'énergie servant à actionner le moteur d'entraînement (5) et/ou à évacuer l'objet à stocker.

8. Dispositif de stockage (1) selon la revendication 7, **caractérisé par** un logement dans lequel l'accumulateur d'énergie électrique (16), peut être inséré ou de nouveau être retiré en particulier sans outil et/ou sans destruction.

9. Dispositif de stockage (1) selon l'une quelconque des revendications 1 à 8, **caractérisé en ce que** :
a. l'arbre d'enroulement (4) comporte dans un plan perpendiculaire à sa direction d'extension longitudinale une forme s'écartant de la forme d'un cercle ; ou
b. l'arbre d'enroulement (4) comporte dans un plan perpendiculaire à sa direction d'extension longitudinale une forme s'écartant de la forme d'un cercle, l'arbre d'enroulement (4) étant réalisé en section transversale à l'aide de plusieurs pans, en particulier de six pans ou de huit pans.

10. Dispositif de stockage (1) selon la revendication 9, **caractérisé en ce que** le moteur d'entraînement (5) comporte un élément d'entraînement en sortie (11) qui est disposé par complémentarité de formes dans l'arbre d'enroulement (4).

11. Dispositif de stockage (1) selon l'une quelconque des revendications 1 à 10, **caractérisé en ce que** le dispositif de stockage (1) comporte au moins un dispositif de fixation mécanique équipé d'au moins une serrure.

12. Dispositif de stockage (1) selon la revendication 11, **caractérisé en ce que** :
a. le dispositif de fixation comporte un moyen de liaison, en particulier un câble métallique ou une chaîne, qui est relié ou peut être relié fixement à une extrémité avec la partie du dispositif de stockage à fixer au plafond ou à la paroi ; et/ou
b. le dispositif de fixation comporte un moyen de liaison, en particulier un câble métallique ou une chaîne qui est relié ou peut être relié fixement à une extrémité avec la partie du dispositif de stockage (1) à fixer au plafond (2) ou à la paroi et que l'autre extrémité du moyen de liaison comporte une serrure ; et/ou
c. le moyen de traction (3) fait partie du dispositif de fixation ; et/ou
d. le moyen de liaison est formé par au moins une partie du moyen de traction (3) ; et/ou
e. l'élément de couplage (15) comporte la serrure ou est réalisé sous forme de serrure.

13. Dispositif de stockage (1) selon l'une quelconque des revendications 1 à 12, **caractérisé en ce que** :
a. la télécommande comporte un dispositif de fixation d'accès ; ou
b. la télécommande comporte un dispositif de fixation d'accès comprenant un détecteur biométrique ; ou
c. la télécommande comporte un dispositif de fixation d'accès comportant un dispositif d'entrée et de contrôle d'un mot de passe.

14. Système de dispositif de stockage, qui comporte au moins deux dispositifs de stockage (1) selon l'une quelconque des revendications 1 à 13 lesquels peuvent être commandés simultanément et de façon synchrone à l'aide de ladite télécommande.
